# EUROPEAN PATENT APPLICATION

(11) **EP 4 170 814 A1**
(43) Date of publication of application: **26.04.2023**
(21) Application number: 22201903.6
(22) Date of filing: 17.10.2022
(51) Int. Cl.: H01M 50/531, H01M 50/533, H01M 50/54, H01M 50/103, H01M 50/538

(54) **SECONDARY BATTERY**

(30) Priority: 19.10.2021 JP 2021171025
(71) Applicant: Prime Planet Energy & Solutions, Inc., Chuo-ku Tokyo 103-0022 (JP)
(72) Inventor: TSUJIGUCHI, Takafumi, Tokyo, 103-0022 (JP); TAKABAYASHI, Hiroshi, Tokyo, 103-0022 (JP)
(74) Representative: Kuhnen & Wacker Patent- und Rechtsanwaltsbüro PartG mbB

(57) **Abstract**

Provided is a technique for accommodating current collector tabs joined to current collector terminals inside a battery case in a better state. The secondary battery (100) disclosed herein has an electrode body (20), a battery case (10) that accommodates the electrode body (20), and current collector terminals (30, 40) attached to the battery case (10). The electrode body (20) comprises a plurality of current collector tabs (21t, 22t). The plurality of current collector tabs (21t, 22t) have a bundled portion (Tl) where the current collector tabs (21t, 22t) are bundled in a stacked state, and a joined portion (90) joined to the current collector terminal (30, 40).

## Description

### BACKGROUND OF THE DISCLOSURE

### 1. Technical Field

The present disclosure relates to a secondary battery.

### 2. Background

Japanese Patent Application Publication 2020-177930 discloses a secondary battery including an electrode body having tabs, an exterior body provided with the electrode body, and a sealing plate that seals the exterior body and has terminals. In the secondary battery disclosed herein, electrode tabs protruding from the electrode body are joined to a current collector terminal of the same electrode attached to the exterior body. Through the joints, the electrode tabs are electrically connected to electrode terminals located outside the battery case.

### SUMMARY OF THE INVENTION

Where the current collector tabs joined to the current collector terminals are accommodated in the battery case, it is preferable that the current collector tab be housed under better conditions in the battery case, for example, such that bending that causes a large load on the current collector tabs be prevented as much as possible.

The secondary battery disclosed herein has an electrode body, a battery case that accommodates the electrode body, and current collector terminals attached to the battery case. The electrode body has a plurality of current collector tabs. The plurality of current collector tabs have a bundled portion where the current collector tabs are bundled in a stacked state and a joined portion joined to the current collector terminal.

In the secondary battery having such a configuration, the plurality of current collector tabs are bundled in a stacked state at a location different from the portions where the current collector tabs are joined to the current collector terminal, and bending of the current collector tabs inside the battery case is suppressed. Further, the electrode body can be accommodated in the battery case with the plurality of current collector tabs maintaining a constant shape. Therefore, damage to the current collector tabs due to the bending can be suppressed.

In a preferred embodiment of the secondary battery disclosed herein, the plurality of current collector tabs extend from the electrode body, and the bundled portion is provided on the electrode body side with respect to the joined portion in the direction in which the plurality of the current collector tabs extend from the electrode body. Because of such a configuration, it is possible to better suppress the bending of the current collector tabs and to accommodate the current collector tabs in the battery case while maintaining a constant shape of the current collector tabs.

In a preferred embodiment of the secondary battery disclosed herein, the current collector tabs are joined to each other by solid phase joining or with an adhesive layer at the bundled portion.

With such a configuration, by joining the current collector tabs by solid phase joining, in addition to the above effects, the plurality of current collector tabs can be bundled more easily. In addition, the resistance of the secondary battery can be reduced. By bonding the current collector tabs with the adhesive layer, damage to the current collector tabs can be reduced, and the bending suppressing effect can be better realized.

In a preferred embodiment of the secondary battery disclosed herein, the plurality of current collector tabs are fixed to each other by a fixing member at the bundled portion. By fixing the plurality of current collector tabs with the fixing member, the above-mentioned bending suppressing effect can be realized.

### BRIEF DESCRIPTION OF THE DRAWINGS

FIG. 1 is a partial cross-sectional view of a secondary battery 100;
FIG. 2 is a cross-sectional view taken along the line II-II in FIG. 1;
FIG. 3 is a plan view showing a state in which a plurality of negative electrode current collector tabs 22t is bundled;
FIG. 4 is a schematic diagram illustrating one means for bundling the plurality of negative electrode current collector tabs 22t;
FIG. 5 is a plan view showing a state in which the plurality of negative electrode current collector tabs 22t are fixed by a fixing member 2; and
FIG. 6 is a plan view showing a state in which the plurality of negative electrode current collector tabs 22t are fixed by a fixing member 3.

### DETAILED DESCRIPTION OF THE PREFERRED EMBODIMENTS

Hereinafter, embodiments of the secondary battery disclosed herein will be described. The embodiments described herein are, of course, not intended to specifically limit the invention. The technique disclosed herein is not limited to the embodiments described herein unless stated otherwise. Each drawing is drawn schematically and does not necessarily reflect the actual article. Further, members/parts having the same action are designated, as appropriate, by the same reference numerals, and duplicate description thereof will be omitted. Further, the notation such as "A to B" indicating a numerical range means "A or more and B or less" and is inclusive of "more than A and less than B" unless stated otherwise.

As used herein, the term "secondary battery" refers to a general power storage device in which a charge/discharge reaction occurs when a charge carrier moves between a pair of electrodes (positive electrode and negative electrode) through an electrolyte. Such a secondary battery is inclusive of not only a so-called storage battery such as a lithium ion secondary battery, a nickel hydrogen battery, and a nickel cadmium battery, but also a capacitor such as an electric double layer capacitor. Hereinafter, an embodiment targeting a lithium ion secondary battery among the above-mentioned secondary batteries will be described.

### First Embodiment

### Secondary Battery 100

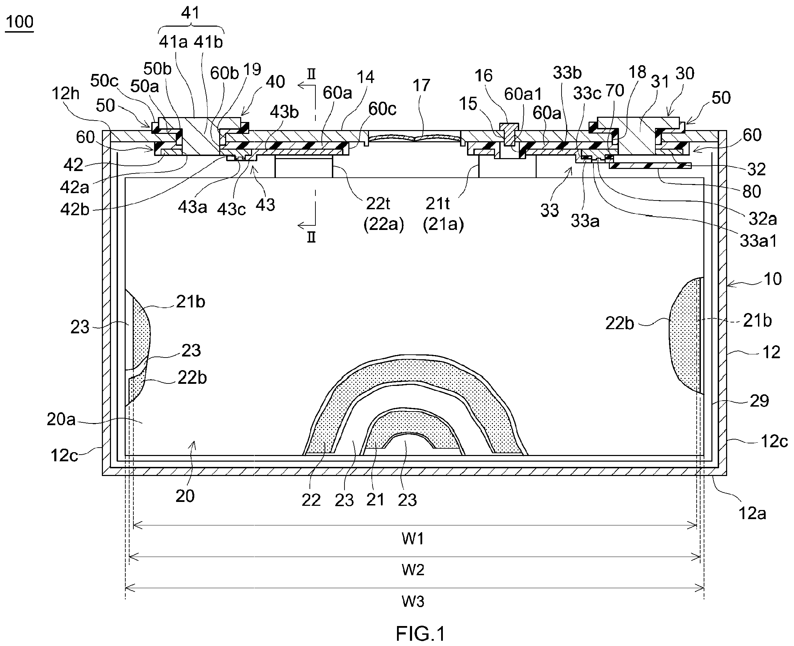

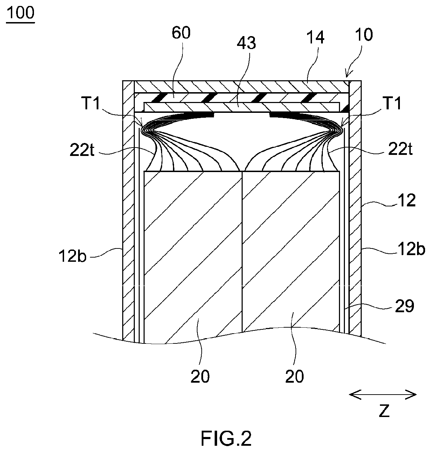

FIG. 1 is a partial cross-sectional view of the secondary battery 100. In FIG. 1, a state in which the inside is exposed is drawn along a wide surface on one side of a substantially rectangular parallelepiped battery case 10. FIG. 2 is a cross-sectional view taken along the line II-II in FIG. 1. FIG. 2 schematically shows a partial cross-sectional view illustrating joining of the negative electrode current collector tabs 22t to a negative electrode current collector terminal 43, the view being taken from the narrow surface of the substantially rectangular parallelepiped battery case 10. As shown in FIGS. 1 and 2, the secondary battery 100 includes a battery case 10 and an electrode body 20.

### Battery Case 10

As shown in FIGS. 1 and 2, the battery case 10 has a case body 12 and a lid 14. In this embodiment, from the viewpoint of weight reduction and ensuring a required rigidity, the case body 12 and the lid 14 are each made of aluminum or an aluminum alloy mainly composed of aluminum.

### Case Body 12

As shown in FIG. 1, the case body 12 accommodates the electrode body 20 and has an opening 12h for accommodating the electrode body 20. The case body 12 has a substantially rectangular parallelepiped angular shape with one side surface open. As shown in FIGS. 1 and 2, the case body 12 has a substantially rectangular bottom surface 12a, a pair of wide surfaces 12b, and a pair of narrow surfaces 12c. Each of the pair of wide surfaces 12b rises from the long side of the bottom surface 12a. Each of the pair of narrow surfaces 12c rises from the short side of the bottom surface 12a. The opening 12h is formed by being surrounded by a long side of a pair of wide surfaces 12b and a short side of a pair of narrow surfaces 12c.

Further, the case body 12 may accommodate an electrolytic solution (not shown) together with the electrode body 20. As the electrolytic solution, a non-aqueous electrolytic solution in which a supporting salt is dissolved in a non-aqueous solvent can be used. Examples of the non-aqueous solvent include carbonate solvents such as ethylene carbonate, dimethyl carbonate, and ethyl methyl carbonate. As an example of the supporting salt, a fluorine-containing lithium salt such as LiPF₆ can be mentioned.

### Lid 14

The lid 14 is attached to the opening 12h of the case body 12. The peripheral edge portion of the lid 14 is joined to the edge of the opening 12h of the case body 12. Such joining may be, for example, continuous welding with no gaps. Such welding can be realized, for example, by laser welding. The case body 12 and the lid 14 have dimensions corresponding to the number (one or more; two in the embodiment shown in FIG. 2) and size of electrode bodies to be accommodated, and the like. The lid 14 is provided with a liquid injection hole 15 and a gas discharge valve 17. The liquid injection hole 15 is for injecting an electrolytic solution after joining the lid 14 to the case body 12. The liquid injection hole 15 is sealed by a sealing member 16. The gas discharge valve 17 is a thin-walled portion configured to break when the internal pressure of the secondary battery 100 reaches or exceeds a predetermined value and to discharge the gas in the secondary battery 100 to the outside.

In this embodiment, a positive electrode terminal 30 and a negative electrode terminal 40 are attached to the lid 14. The positive electrode terminal 30 includes a positive electrode external terminal 31, a connecting member 32, and a positive electrode current collector terminal 33. The negative electrode terminal 40 includes a negative electrode external terminal 41, a connecting member 42, and a negative electrode current collector terminal 43. The positive electrode external terminal 31 and the negative electrode external terminal 41 are attached to the outer side of the lid 14 through a respective external insulating member 50. The connecting member 32 and the positive electrode current collector terminal 33, and the connecting member 42 and the negative electrode current collector terminal 43 are attached to the inner side of the lid 14 through an internal insulating member 60 provided on each electrode side. The connecting member 32 and the positive electrode current collector terminal 33, and the connecting member 42 and the negative electrode current collector terminal 43 are arranged along the inner surface of the lid 14. The positive electrode current collector terminal 33 is connected to the positive electrode (specifically, the positive electrode sheet 21) of the electrode body 20 through a positive electrode current collector tab 21t. The negative electrode current collector terminal 43 is connected to the negative electrode (specifically, the negative electrode sheet 22) of the electrode body 20 through the negative electrode current collector tab 22t.

As shown in FIG. 1, the positive electrode current collector tab 21t and the negative electrode current collector tab 22t of the electrode body 20 are attached to the positive electrode current collector terminal 33 and the negative electrode current collector terminal 43, respectively, the terminals being attached to the respective side portions of the lid 14 in the longitudinal direction. The electrode body 20 is accommodated in the case body 12 in a state of being attached to the lid 14 through the current collector tabs in this way. As shown in FIGS. 1 and 2, the electrode body 20 is accommodated in the case body 12 so that the wide rectangular surface 20a faces the wide surface 12b of the case body 12. The connection between the current collector terminals and the current collector tabs will be further described hereinbelow.

Hereinafter, the terminal structure in the secondary battery 100 and the connection between the electrode body 20 and the lid 14 will be described in detail by taking the negative electrode side as an example. As shown in FIG. 1, the lid 14 has an attachment hole 19 for attaching the negative electrode external terminal 41. The attachment hole 19 penetrates the lid 14 at a predetermined position of the lid 14. The negative electrode external terminal 41 is attached to the attachment hole 19 of the lid 14 with the external insulating member 50 interposed therebetween.

### Negative Electrode External Terminal 41

Here, the external terminal 41 of the negative electrode includes a head portion 41a and a shaft portion 41b. The head portion 41a is arranged on the outer side of the lid 14. The head portion 41a is a substantially flat plate-shaped portion larger than the attachment hole 19. The shaft portion 41b is mounted on the attachment hole 19 with the external insulating member 50 interposed therebetween. The shaft portion 41b projects downward (inside the case body 12 in FIG. 1) from the substantially central portion of the head portion 41a. As shown in FIG. 1, the tip of the shaft portion 41b is a portion crimped to the connecting member 42 inside the lid 14. The tip of the shaft portion 41b is bent while being inserted into the attachment hole 19 of the lid 14 and the through hole 42a of the connecting member 42, and is crimped to the connecting member 42.

### External Insulating Member 50

As shown in FIG. 1, the external insulating member 50 is attached to the inner surface of the attachment hole 19 of the lid 14 and the outer surface of the lid 14. In this embodiment, the external insulating member 50 includes a base portion 50a, a tubular portion 50b, and a side wall 50c. The base portion 50a is mounted on the outer surface around the attachment hole 19 of the lid 14. The base portion 50a has a surface (in this embodiment, a substantially flat surface) that matches the outer surface. The tubular portion 50b protrudes from the bottom surface of the base portion 50a. The tubular portion 50b has an outer shape along the inner side surface of the attachment hole so as to be mounted on the attachment hole 19 of the lid 14. The inner surface of the tubular portion 50b serves as a mounting hole for mounting the shaft portion 41b of the negative electrode external terminal 41. The side wall 50c rises upward from the peripheral edge of the base portion 50a. The head portion 41a of the negative electrode external terminal 41 is mounted on a portion surrounded by the side wall 50c of the external insulating member 50.

The external insulating member 50 is arranged between the lid 14 and the negative electrode external terminal 41 to secure the insulation thereof. Further, the external insulating member 50 ensures the airtightness of the attachment hole 19 of the lid 14. From this viewpoint, a material having excellent chemical resistance and weather resistance may be used. In this embodiment, PFA is used for the external insulating member 50. PFA is a copolymer of tetrafluoroethylene and perfluoroalkoxyethylene (Tetrafluoroethylene - Perfluoroalkylvinylether Copolymer). The material used for the external insulating member 50 is not limited to PFA.

### Internal Insulating Member 60

The internal insulating member 60 is mounted on the inner side of the lid 14 around the attachment hole 19 of the lid 14. The internal insulating member 60 includes a flat portion 60a, a hole 60b, and a side wall 60c. The flat portion 60a is arranged along the inner surface of the lid 14. In this embodiment, the flat portion 60a is a substantially flat plate-shaped portion. The flat portion 60a is arranged along the inner surface of the lid 14 and has a size such that the flat portion does not protrude from the lid 14 so as to be accommodated in the case body 12. The hole 60b is provided correspondingly to the attachment hole 19. In this embodiment, the hole 60b is provided in a substantially central portion of the flat portion 60a. The side wall 60c rises downward from the peripheral edge of the flat portion 60a. Since the internal insulating member 60 in which the connecting member 42 and the negative electrode current collector terminal 43 are accommodated is arranged inside the case body 12, the flat portion 60a may be provided with the required chemical resistance. In this embodiment, PPS is used for the internal insulating member 60. PPS is a polyphenylene sulfide resin. The material suitable for the internal insulating member 60 is not limited to PPS.

### Connecting Member 42

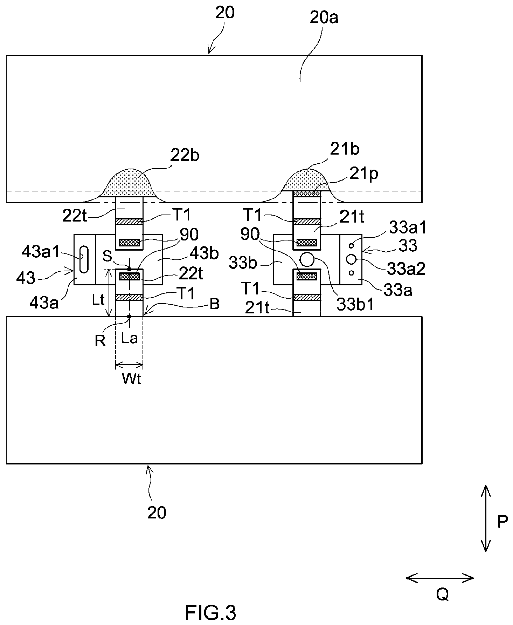

As shown in FIG. 1, the connecting member 42 has a substantially flat plate shape and includes a through hole 42a and a protrusion 42b. The connecting member 42 is mounted on the flat portion 60a of the internal insulating member 60 and connects the negative electrode external terminal 41 and the negative electrode current collector terminal 43. The shaft portion 41b of the negative electrode external terminal 41 is inserted through the through hole 42a. The shaft portion 41b is crimped around the through hole 42a. The protrusion 42b is a portion fitted into a through hole 43a1 (see FIG. 3) provided in a first plate portion 43a of the negative electrode current collector terminal 43. The protrusion 42b is shaped to enable fitting into the through hole 43a1. In this embodiment, the planar shape of the protrusion 42b seen from the inner surface side of the lid 14 is oval. The connecting member 42 is made of, for example, copper or a copper alloy.

### Negative Electrode Current Collector Terminal 43

As shown in FIGS. 1 to 3, the negative electrode current collector terminal 43 is attached to the lid 14 with the internal insulating member 60 interposed therebetween. The negative electrode current collector terminal 43 includes the first plate portion 43a, a second plate portion 43b, and a step portion 43c. The first plate portion 43a is arranged along the surface of the connecting member 42. In this embodiment, the first plate portion 43a is a substantially flat plate-shaped portion. The first plate portion 43a has the through hole 43a1. The protrusion 42b of the connecting member 42 is fitted into the through hole 43a1. The through hole 43a1 is formed in a shape such that the protrusion 42b can be fitted therein. The second plate portion 43b is arranged on the flat portion 60a of the internal insulating member 60. In this embodiment, the second plate portion 43b is a substantially flat plate-shaped portion. The negative electrode current collector tab 22t is joined to the second plate portion 43b. The step portion 43c rises from one end of the first plate portion 43a toward one end of the second plate portion 43b and connects both plate portions. In this embodiment, the step portion 43c is arranged along the side wall of the connecting member 42. The negative electrode current collector terminal 43 is made of, for example, copper or a copper alloy.

### Electrode Body 20

The electrode body 20 is a power generation element of the secondary battery 100 and includes a positive electrode, a negative electrode and a separator that separates the positive electrode and the negative electrode. Further, the electrode body 20 has current collector tabs that are electrically connected to the outside. As shown in FIG. 2, in this embodiment, the secondary battery 100 includes two electrode bodies 20 arranged adjacent to each other. As shown in FIGS. 1 and 2, the two adjacent electrode bodies 20 are accommodated in the case body 12 in a state of being covered with the insulating film 29. As shown in FIG. 1, the electrode body 20 includes the positive electrode sheet 21 as a positive electrode element, the negative electrode sheet 22 as a negative electrode element, and a separator sheet 23 as a separator. A laminated structure is provided in which the positive electrode sheet 21 and the negative electrode sheet 22 are laminated with the separator sheet 23 interposed therebetween. Here, the electrode body 20 is exemplified as a so-called laminated electrode body in which the positive electrode sheet 21 and the negative electrode sheet 22 formed in a predetermined shape are laminated with the separator sheet 23 interposed therebetween.

### Positive Electrode Sheet 21

As shown in FIG. 1, the positive electrode sheet 21 includes a substantially rectangular positive electrode current collector foil 21a and a positive electrode active material layer 21b formed on the positive electrode current collector foil 21a. The positive electrode active material layer 21b is formed on both side surfaces of the positive electrode current collector foil 21a. In this embodiment, the formation region of the positive electrode active material layer 21b is rectangular. The positive electrode sheet 21 has a positive electrode current collector tab 21t protruding from one side of the formation region of the positive electrode active material layer 21b (see FIG. 3). The positive electrode current collector tab 21t is a part of the positive electrode current collector foil 21a and is an active material layer non-formation portion in which the positive electrode active material layer 21b is not formed on the surface. In this embodiment, a positive electrode protective layer 21p is formed at the boundary between the positive electrode active material layer 21b and the positive electrode current collector tab 21t (see FIG. 3). Here, the positive electrode protective layer 21p is formed at the end of the positive electrode active material layer 21b in the protrusion direction of the positive electrode current collector tab 21t and is adjacent to the positive electrode current collector tab 21t. The formation of the positive electrode protective layer 21p is not essential.

For the positive electrode current collector foil 21a, for example, an aluminum foil can be used. The positive electrode active material layer 21b is a layer including a positive electrode active material. For example, in a lithium ion secondary battery, the positive electrode active material is a material that can release lithium ions during charging and absorb lithium ions during discharging, such as a lithium transition metal composite material. Various positive electrode active materials have been generally proposed in addition to the lithium transition metal composite material, and the positive electrode active material is not particularly limited. The positive electrode protective layer 21p is a layer including an inorganic filler such as alumina.

### Negative Electrode Sheet 22

As shown in FIG. 1, the negative electrode sheet 22 includes a substantially rectangular negative electrode current collector foil 22a and a negative electrode active material layer 22b formed on the negative electrode current collector foil 22a. The negative electrode active material layer 22b is formed on both side surfaces of the negative electrode current collector foil 22a. In this embodiment, the formation region of the negative electrode active material layer 22b is rectangular. The negative electrode sheet 22 has a negative electrode current collector tab 22t protruding from one side of the formation region of the negative electrode active material layer 22b (see FIG. 3). The negative electrode current collector tab 22t is a part of the negative electrode current collector foil 22a and is an active material layer non-formation portion in which the negative electrode active material layer 22b is not formed on the surface.

For the negative electrode current collector foil 22a, for example, a copper foil can be used. The negative electrode active material layer 22b is a layer including a negative electrode active material. For example, in a lithium ion secondary battery, the negative electrode active material is a material that can occlude lithium ions during charging and release the lithium ions occluded during charging at the time of discharging, such as natural graphite. Various negative electrode active materials have been generally proposed in addition to natural graphite, and the negative electrode active material is not particularly limited.

### Separator Sheet 23

In this embodiment, the separator sheet 23 has a substantially rectangular shape and is formed to be larger than the negative electrode active material layer 22b so as to be able to cover the negative electrode active material layer 22b. For the separator sheet 23, for example, a porous resin sheet through which an electrolyte having a required heat resistance can pass is used. Various separator sheets 23 have also been proposed, and the separator sheet is not particularly limited.

As shown in FIG. 1, the width W2 of the negative electrode active material layer 22b in the long side direction of the bottom surface 12a is larger than the width W1 of the positive electrode active material layer 21b in the same direction. The width W3 of the separator sheet 23 in the long side direction of the bottom surface 12a is larger than the width W2 of the negative electrode active material layer 22b. The positive electrode current collector tab 21t and the negative electrode current collector tab 22t have a required length so as to protrude from the separator sheet 23 (see FIG. 3). As shown in FIG. 1, the positive electrode sheet 21, the negative electrode sheet 22, and the separator sheet 23 are laminated so that the negative electrode active material layer 22b covers the positive electrode active material layer 21b with the separator sheet 23 interposed therebetween and so that the positive electrode current collector tab 21t and the negative electrode current collector tab 22t protrude from the separator sheet 23. In this embodiment, in the rectangular region formed by stacking the positive electrode sheet 21 and the negative electrode sheet 22 with the separator sheet 23 interposed therebetween, the positive electrode active material layers 21b are formed on both sides of the positive electrode sheet 21, and the negative electrode active material layers 22b are formed on both sides of the negative electrode sheet 22. Further, at one end of the rectangular region, a plurality of positive electrode current collector tabs 21t is projected in a superposed state. At the one end portion, a plurality of negative electrode current collector tabs 22t is also projected in a superposed state.

As shown in FIGS. 1 and 3, in the electrode body 20, an electrode body main portion excluding the positive electrode current collector tab 21t and the negative electrode current collector tab 22t has a flat rectangular parallelepiped shape having a pair of wide rectangular surfaces 20a. In this embodiment, the end faces of the electrode sheets and the separator sheet 23 in the stacking direction Z constitute the wide rectangular surface 20a. The four side surfaces of the electrode body main portion, except for the pair of wide rectangular surfaces 20a, are the surfaces where the positive electrode sheet 21, the negative electrode sheet 22, and the separator sheet 23 are laminated.

As shown in FIGS. 1 and 2, in this embodiment, the plurality of negative electrode current collector tabs 22t protruding from the electrode body 20 are joined in a stacked state to the second plate portion 43b of the negative electrode current collector terminal 43.

FIG. 3 is a plan view showing a state in which the plurality of negative electrode current collector tabs 22t are bundled. As shown in FIG. 3, the positive electrode current collector terminal 33 and the negative electrode current collector terminal 43 are arranged side by side so as to be spaced apart from each other and so that the joining surfaces for joining the current collector tabs face upward. In this embodiment, the positive electrode current collector terminal 33 and the negative electrode current collector terminal 43 are attached to the lid 14 and then arranged so that a second plate portion 33b and the second plate portion 43b are on the side of the gas discharge valve 17 provided in lid 14 (see FIG. 1). The two electrode bodies 20 are arranged symmetrically with respect to the positive electrode current collector terminal 33 and the negative electrode current collector terminal 43 with the positive electrode current collector tabs 21t of the electrode bodies facing each other and the negative electrode current collector tabs 22t of the electrode bodies facing each other. The positive electrode current collector tabs 21t and the negative electrode current collector tabs 22t are stacked and joined to the positive electrode current collector terminal 33 and the negative electrode current collector terminal 43.

Hereinafter, the joining between the negative electrode current collector tabs 22t and the negative electrode current collector terminal 43 will be described. In this embodiment, as shown in FIG. 3, the tips of the negative electrode current collector tabs 22t extending from the two electrode bodies 20 arranged symmetrically with respect to the negative electrode current collector terminal 43 are arranged on the joining surface of the second plate portion 43b so as to face each other. At least a part of the negative electrode current collector tab 22t is joined to the second plate portion 43b to form a joined portion 90. Then, after the negative electrode current collector tabs 22t of the two electrode bodies are joined to the negative electrode current collector terminal 43, the negative electrode current collector terminal 43 is attached to the lid 14 in a state in which the negative electrode current collector tabs 22t are joined. After the negative electrode current collector terminal 43 is attached to the lid 14, the wide rectangular surfaces 20a of the electrode bodies 20 are overlapped with each other and the electrode bodies are accommodated in the case body 12 (see FIG. 2). Means for joining the negative electrode current collector tab 22t to the second plate portion 43b of the negative electrode current collector terminal 43 is not particularly limited and can be conventionally known joining means such as ultrasonic joining, resistance welding, and laser welding.

When a plurality of current collector tabs is stacked and joined to the current collector terminal, and the electrode body is accommodated in the battery case, the current collector tabs may bend. The present inventors consider it desirable to suppress the bending of the current collector tabs and accommodate the electrode bodies in the battery case while the current collector tabs maintain a constant shape. The present inventors consider that this will make it possible to suppress damage to the current collector tabs due to bending of the current collector tabs (for example, tearing of the bent portion, piercing into another current collector tab or the electrode body, etc.).

### Negative Electrode Current Collector Tab 22t

As shown in FIG. 3, the negative electrode current collector tab 22t has a band shape and extends from the electrode body 20 toward the second plate portion 43b of the negative electrode current collector terminal 43. In the figure, the direction in which the negative electrode current collector tab 22t extends from the electrode body 20 is indicated by an arrow P and referred to hereinbelow as "extension direction P". The extension direction P can be defined by, for example, a line La connecting a center R in a width direction Q of a base end B of the negative electrode current collector tab 22t and a center S in a width direction of the tip of the negative electrode current collector tab 22t. Here, the base end B of the negative electrode current collector tab 22t refers to the boundary between the negative electrode current collector terminal 43 and the outer edge of the electrode body 20. The outer edge of the electrode body 20 is, for example, the peripheral edge of the wide rectangular surface 20a of the electrode body 20.

In this embodiment, the plurality of negative electrode current collector tabs 22t have a bundled portion T1 where the negative electrode current collector tabs are bundled in a stacked state. In the present description, "the plurality of negative electrode current collector tabs 22t are bundled" means, for example, that only the plurality of negative electrode current collector tabs 22t are integrated, and also that the plurality of negative electrode current collector tab 22t are integrated by using the fixing member 2 or fixing member 3 described hereinbelow.

As shown in FIG. 3, in the extension direction P, the bundled portion T1 is provided on the electrode body 20 side with respect to the joined portion 90. Where the length of a line segment RS connecting the points R and S is Lt, the bundled portion T1 may be provided, for example, at a position separated by 1/4 Lt to 3/4 Lt from the base end B on the electrode body 20 side with respect to the joined portion 90.

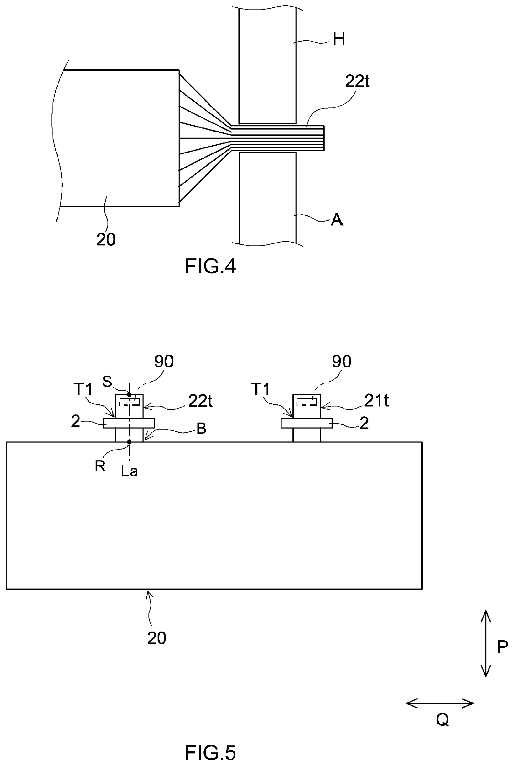

FIG. 4 is a schematic diagram illustrating a means for bundling the plurality of negative electrode current collector tabs 22t. As shown in FIG. 4, the plurality of negative electrode current collector tabs 22t can be bundled by, for example, solid phase joining. In this embodiment, the bundled portion T1 is formed by solid phase joining. Examples of such solid phase joining include ultrasonic joining. As shown in FIG. 4, the plurality of negative electrode current collector tabs 22t extending from the electrode body 20 are sandwiched between a horn H and an anvil A of an ultrasonic joining device in a stacked state thereof. Then, ultrasonic energy is applied while pressurizing the plurality of negative electrode current collector tabs 22t in the stacking direction. The plurality of negative electrode current collector tabs 22t can thus be bundled. Further, the solid phase joining can also be realized by sandwiching the plurality of negative electrode current collector tabs 22t with a pair of probes from the stacking direction and heating while pressurizing. The conditions for solid phase joining are not particularly limited and are set as appropriate.

Alternatively, the plurality of negative electrode current collector tabs 22t can be bundled by using an adhesive layer. In this case, the bundled portion T1 is provided by forming the adhesive layer. For example, first, an adhesive is applied to a predetermined portion of each negative electrode current collector tab 22t. Next, the negative electrode current collector tabs 22t are stacked. Next, pressure is applied in the direction in which the negative electrode current collector tabs 22t are stacked. As a result, the plurality of negative electrode current collector tabs 22t can be bundled. In applying the above pressure, heating may be performed as needed. Although not particularly limited, for example, polyvinylidene fluoride (PVDF) can be preferably used as the adhesive.

Although not particularly limited, where the width of the negative electrode current collector tab 22t is Wt, the formation width of the adhesive layer can be, for example, 1/4 Wt to Wt. Here, the "width of the negative electrode current collector tab 22t" means, for example, the length of the negative electrode current collector tab 22t in the width direction Q at the base end B.

In this embodiment, the plurality of negative electrode current collector tabs 22t attached to the lid 14 are accommodated in the case body 12 in a curved state. As shown in FIG. 2, the cross section of the plurality of negative electrode current collector tabs 22t viewed from the narrow surface side of the battery case 10 is S-shaped. For example, the negative electrode current collector tabs 22t may be accommodated in the battery case 10 so that the bundled portion T1 is arranged at the curved portion on the lid 14 side or near the curved portion.

As described above, the secondary battery 100 has the electrode body 20, the battery case 10 that accommodates the electrode body 20, and the negative electrode current collector terminal 43 attached to the battery case 10. The electrode body 20 has a plurality of negative electrode current collector tabs 22t. The plurality of negative electrode current collector tabs 22t have the bundled portion T1 where the negative electrode current collector tabs are bundled in a stacked state and a joined portion (joined portions 90) joined to the negative electrode current collector terminal 43. In other words, in the secondary battery 100, the plurality of negative electrode current collector tabs 22t are bundled in a stacked state at a position different from that of the joined portion 90. Therefore, it is possible to suppress bending of each negative electrode current collector tab 22t inside the battery case 10. Further, the electrode body 20 can be accommodated in the battery case 10 in a state where the plurality of negative electrode current collector tabs 22t maintain a constant shape (for example, the S-shape as shown in FIG. 2). Damage to the negative electrode current collector tab 22t due to bending can be suppressed.

Further, as described above, the plurality of negative electrode current collector tabs 22t extend from the electrode body 20, and the bundled portion T1 is provided on the electrode body 20 side with respect to the joined portion (joined portion 90) in the direction in which the plurality of negative electrode current collector tabs 22t extend from the electrode body 20 (extension direction P). By bundling the plurality of negative electrode current collector tabs 22t on the electrode body 20 side with respect to the joined portion 90, bending of the negative electrode current collector tabs 22t can be better suppressed and the negative electrode current collector tabs can be accommodated in the battery case 10 while maintaining a constant shape.

Further, in this embodiment, in the bundled portion T1, the negative electrode current collector tabs 22t are joined to each other by solid phase joining or by using an adhesive layer. By solid phase joining each electrode current collector tab 22t, it is possible to omit the use of other members (for example, fixing members described hereinbelow) or materials for bundling each negative electrode current collector tab 22t. Further, since each negative electrode current collector tab 22t can be directly joined, the resistance can be reduced. Meanwhile, by joining (bonding) each negative electrode current collector tab 22t by using the adhesive layer, damage to the negative electrode current collector tab 22t can be reduced and bending can be better suppressed.

The structure near the terminal of the secondary battery 100 and the current collector tabs have been described above by taking the negative electrode side as an example. Regarding the structure near the terminals of the secondary battery 100, as shown in FIG. 1, on the positive electrode side, a fuse member 70 is arranged between the connecting member 32 and the first plate portion 33a of the positive electrode current collector terminal 33. A flat plate-shaped terminal protection member 80 is arranged between the positive electrode external terminal 31 and the electrode body 20. As shown in FIG. 1, the flat portion 60a of the internal insulating member 60 arranged on the positive electrode side is provided with a cylindrical opening 60a1 protruding inward of the case body 12. The tubular opening 60a1 is arranged directly below the liquid injection hole 15. As shown in FIGS. 1 and 3, the first plate portion 33a of the positive electrode current collector terminal 33 is provided with a through hole 33a1 for mounting a protrusion 32a of the connecting member 32 and a through hole 33a2 for mounting a protrusion provided on the fuse member 70. Further, the second plate portion 33b of the positive electrode current collector terminal 33 is provided with a through hole 33b1 for mounting the cylindrical opening 60a1. The positive electrode external terminal 31, the connecting member 32, and the positive electrode current collector terminal 33 can all be formed of aluminum or an aluminum alloy. In FIG. 1, reference numeral 18 denotes an attachment hole on the positive electrode side, and reference numeral 33c denotes a stepped portion of the positive electrode current collector terminal 33. Other features are basically the same as on the negative electrode side, so the description thereof will be omitted herein. Further, the configurations of the fuse member and the terminal protection member, and the configurations different from those on the negative electrode side and not specifically described in the present description do not characterize the technique disclosed herein, and thus the description thereof will be omitted.

Joining between the current collector tabs on the positive electrode side and the current collector terminal is the same as on the negative electrode side, so the description thereof is omitted herein. Further, the secondary battery 100 may have at least one form of the above-mentioned current collector tabs. From the viewpoint of better realizing the effects of the technique disclosed herein, it is preferable that the secondary battery 100 includes the form of the above-mentioned current collector tabs at both the positive electrode and the negative electrode.

The embodiment of the technique disclosed herein has been described above. The above-mentioned first embodiment illustrates an example of a secondary battery to which the technique disclosed herein has been applied, and is not intended to limit the technique disclosed herein. Hereinafter, other embodiments of the techniques disclosed herein will be described. In the following description, configurations substantially equivalent to those of the secondary battery 100 according to the first embodiment can be adopted unless specifically stated otherwise.

### Other Embodiments

In the first embodiment, the plurality of negative electrode current collector tabs 22t were bundled at a predetermined portion by solid phase joining or joining (bonding) by using an adhesive layer. However, these means are not limiting. FIG. 5 is a plan view showing a state in which the plurality of negative electrode current collector tabs 22t are fixed by the fixing member 2. As shown in FIG. 5, the plurality of negative electrode current collector tabs 22t are bundled at the portion T1. In this embodiment, in the bundled portion T1, the plurality of negative electrode current collector tabs 22t are fixed to each other by the fixing member 2. The fixing member 2 can be exemplified by an adhesive tape. In the embodiment shown in FIG. 5, in the bundled portion T1, the plurality of negative electrode current collector tabs 22t are fixed to each other by attaching an adhesive tape (fixing member 2) around the plurality of negative electrode current collector tabs 22t.

As the adhesive tape, for example, an adhesive tape having chemical resistance (electrolyte resistance) can be used. Although not particularly limited, an adhesive tape having an adhesive layer (for example, PVDF layer) as the base material (for example, a polyolefin film) may be used. By fixing the plurality of negative electrode current collector tabs 22t using such an adhesive tape, it is possible to suppress bending of the negative electrode current collector tabs 22t and to accommodate the negative electrode current collector tabs in the battery case 10 while maintaining a constant shape as described above. Further, since fixing is performed by the adhesive tape, damage to the negative electrode current collector tab 22t can be reduced.

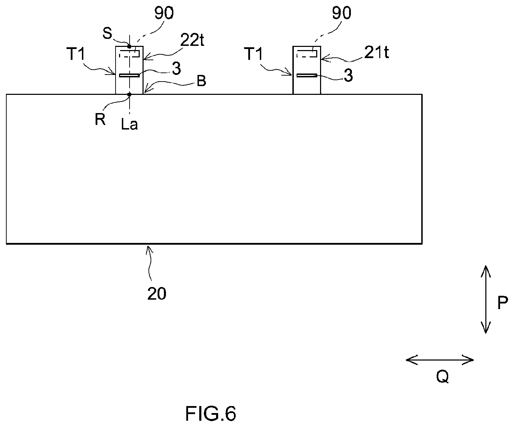

FIG. 6 is a plan view showing a state in which the plurality of negative electrode current collector tabs 22t are fixed by the fixing member 3. In the embodiment shown in FIG. 6, in the bundled portion T1, the plurality of negative electrode current collector tabs 22t are fixed by the fixing member 3. The fixing member 3 may be, for example, a metal needle. As such a metal needle, for example, staples can be used. As shown in FIG. 6, the plurality of negative electrode current collector tabs 22t can be fixed by a so-called stapler. By fixing the plurality of negative electrode current collector tabs 22t using the fixing member 3, it is possible to suppress bending of the negative electrode current collector tabs 22t and to accommodate the negative electrode current collector tabs in the battery case 10 while maintaining a constant shape as described above. Further, since fixing is performed by a metal needle, resistance can be reduced.

The metal constituting the fixing member 3 is preferably selected according to the constituent materials of the negative electrode current collector tabs 22t and the positive electrode current collector tabs 21t. The fixing member 3 for fixing the plurality of negative electrode current collector tabs 22t is, for example, a needle made of copper or a copper alloy. The fixing member 3 for fixing the plurality of positive electrode current collector tabs 21t is, for example, a needle made of aluminum or an aluminum alloy.

Further, the electrode body 20 included in the secondary battery 100 according to the first embodiment is a laminated electrode body, but a wound electrode body may also be used.

## Claims

1. A secondary battery (100) comprising
an electrode body (20),
a battery case (10) that accommodates the electrode body (20), and
current collector terminals (30, 40) attached to the battery case (10),
wherein
the electrode body (20) comprises a plurality of current collector tabs (21t, 22t), and
the plurality of current collector tabs (21t, 22t) comprise a bundled portion (T1) where the current collector tabs (21t, 22t) are bundled in a stacked state, and a joined portion (90) joined to the current collector terminal (30, 40).

2. The secondary battery (100) according to claim 1, wherein,
the plurality of current collector tabs (21t, 22t) extend from the electrode body (20), and
the bundled portion (T1) is provided on the electrode body (20) side with respect to the joined portion (90) in the direction in which the plurality of the current collector tabs (21t, 22t) extend from the electrode body (20).

3. The secondary battery (100) according to claim 1 or 2, wherein the current collector tabs (21t, 22t) are joined to each other at the bundled portion (T1) by solid phase joining or with an adhesive layer.

4. The secondary battery (100) according to any one of claims 1 to 3, wherein the plurality of current collector tabs (21t, 22t) are fixed to each other by a fixing member (2,3) at the bundled portion (T1).
